# EUROPÄISCHE PATENTSCHRIFT

(11) **EP 2 101 944 B1**
(45) Veröffentlichungstag und Bekanntmachung des Hinweises auf die Patenterteilung: **16.07.2014**
(21) Anmeldenummer: 07856035.6
(22) Anmeldetag: 28.11.2007
(51) Int. Cl.: B23B 27/16, B23B 29/24, B23C 5/24

(54) **SPANABHEBENDES WERKZEUG**
MACHINING TOOL
OUTIL D'USINAGE À ENLÈVEMENT DE COPEAUX

(30) Priorität: 29.11.2006 DE 102006056595
(43) Veröffentlichungstag der Anmeldung: 23.09.2009
(73) Patentinhaber: Gühring OHG, 72458 Albstadt (DE)
(72) Erfinder: MATHEIS, Klaus, 88605 Sauldorf-Rast (DE)
(74) Vertreter: Meitinger, Thomas Heinz
(86) Internationale Anmeldenummer: PCT/DE2007/002142
(87) Internationale Veröffentlichungsnummer: WO 2008/064656

(56) Entgegenhaltungen:
- EP-A- 0 126 432
- EP-A- 1 447 162
- DE-A1- 2 647 066
- DE-A1- 3 042 051

## Beschreibung

Die Erfindung betrifft ein spanabhebendes Werkzeug nach dem Oberbegriff des Anspruchs 1.

### Stand der Technik

Spanabhebende Werkzeuge der einleitend bezeichneten Art sind bereits in vielfältiger Ausführungsform bekannt. Bei einer Ausführungsform wird die Feinverstellung einer Schneidplatte über eine Kassette vorgenommen, die vorzugsweise in einer passenden Aussparung am Werkzeugträger montiert ist. Zur Justierung der Schneidplatte wird die Kassette in Bezug auf die Aussparung über Justiermittel in die gewünschte Position gebracht. Es ist beispielsweise gewünscht, lediglich eine Ecke der Schneidplatte am Werkstück in Eingriff zu bringen, wogegen andere Teile der Schneidplatte sicher außer Eingriff bleiben sollen.

In diesem Zusammenhang sind Ausführungsformen bekannt, bei welchen die Schneidplatte an der Kassette festgeschraubt oder mit der Kassette, z.B. durch einen Lötvorgang, fest verbunden ist.

WO 2008/064656 A1 offenbart eine Spann- und Justiervorrichtung für ein Zerspanungswerkzeug, mit einer Vorspann- und Fixiereinrichtung (bzw. Werkzeuggrundkörper), die/der eine Sitzfläche und einen Schneidenträger (bzw. Werkzeugkassette) umfasst, einem plattenförmigen Schneideinsatz (bzw. Schneidplatte) mit einer gegen die Sitzfläche vorspannbaren und fixierbaren Bodenfläche und sich lagefixiert an dem Schneidenträger abstützenden Seitenwandabschnitten. Die Vorspann- und Fixiereinrichtung umfasst ferner einen Verstellkeil, der im Schneidenträger formschlüssig und verschiebbar aufgenommen ist und über den sich der Schneideinsatz abstützt und verstellen lässt. Mit anderen Worten, der Verstellkeil wirkt zwischen dem Schneidenträger (bzw. der Werkzeugkassette) und dem Schneideinsatz. Es wird noch erwähnt, dass es denkbar ist, den Verstellkörper am Werkzeuggrundkörper vorzusehen und damit die Werkzeugkassette in ihrer Lage bezüglich des Werkzeuggrundkörpers zu justieren, jedoch ohne diesbezügliche Ausführungsformen zu beschreiben.

DE 30 42 051 A1 offenbart eine Vorrichtung zum Einstellen eines Schneidstücks gegenüber seinem Halter, etwa einer eine Schneidplatte tragenden Kassette gegenüber einem Fräskörper, mit dem das Schneidstück mittels eines lösbaren Befestigungsgliedes verbunden ist und gegenüber dem das Schneidstück mittels eines Stellgliedes verstellbar ist. Zum Realisieren der Stellfunktion sind eine glattwandige Bohrung, die sich in dem Halter und der Kassette erstreckt, und ein Gewinde für eine Stellschraube, welches Gewinde sich in dem Halter und dem Schneidstück oder Kassette erstreckt, vorgesehen. Die Stellschraube umfasst einen kegelstumpfförmigen Teil, von dem eine Mantellinie parallel zu einer Mantellinie der glattwandigen Bohrung verläuft, wobei beide Mantellinien aneinander legbar sind.

DE 26 47 066, die dem Oberbegriff von Anspruch 1 zugrundeliegt, offenbart einen Scheibenfräser mit einem Fräserkörper mit einer Fräserkörperachse und am Umfang desselben angeordneten Quernuten, Anschlagstücken und einer in den Anschlagstücken gehaltenen, auswechselbaren Schneidplatte. Die Anschlagstücke weisen zwei von ihrer senkrecht zur Fräserkörperachse stehenden Längsmittelebene aus schräg nach außen abfallende Einstellflächen auf. An jeder Einstellfläche liegt eine Stellschraube an, die in einem Gewinde im Fräserkörper angeordnet und von dessen Umfang her betätigbar sind.

### Aufgabe und Vorteile der Erfindung

Der Erfindung liegt die Aufgabe zugrunde, ein spanabhebendes Werkzeug der einleitend bezeichneten Art bereit zu stellen, bei welchen die Möglichkeiten der Justierung der Kassette verbessert sind.

Diese Aufgabe wird durch die Merkmale des Anspruchs 1 gelöst.

In den abhängigen Ansprüchen sind vorteilhafte oder zweckmäßige Weiterbildungen der Erfindung angegeben.

Die Erfindung geht von einem spanabhebenden Werkzeug mit einem Werkzeugträger aus, wobei am Werkzeugträger eine Kassette angebracht ist. An der Kassette ist eine Schneidplatte positioniert. Des Weiteren sind Justiermittel vorgesehen, mit welchen sich die Position der Kassette am Werkzeugträger einstellen lässt. Die Justiermittel umfassen mehrere axial versetzt im Werkzeugträger angeordnete Keilgetriebe, die zwischen Kassette und Werkzeugträger wirken und eine radiale und/oder axiale Justierung bezogen auf eine Längsachse des Werkzeugträgers erlauben.

Erfindungsgemäß umfasst ein jeweiliges Keilgetriebe eine Justierschraube und ein Keilelement, wobei ein jeweiliges Keilelement über die Justierschraube eingestellt werden kann, die in ein entsprechendes Gewinde im Werkzeugträger eingeschraubt ist und auf das Keilelement wirkt. Ferner ist ein jeweiliges Keilelement in einer Ausnehmung im Werkzeugkörper geführt und liegt an der Kassette an.

Bislang sind, außer aus WO 2008/064656 A1 vom gleichen Anmelder, für die Radial- und/oder Axialpositionierung der Kassette keine Keilgetriebe bekannt. Im einfachsten Fall und nicht gemäß der Erfindung könnte ein Keilgetriebe aus einer Schraube mit Kegelfläche, die z.B. unmittelbar auf eine Fläche an der Kassette wirkt, bestehen, so dass eine Relativbewegung an einer schiefen Ebene auftritt. Durch ein derartiges Keilgetriebe ließe sich abhängig vom Neigungsgrad eine vergleichsweise feinfühlige Einstellung der radialen und/oder axialen Position einer Schneidplatte in Bezug auf die Längsachse des Werkzeugträgers vornehmen.

In einem weiteren Aspekt und nicht gemäß der Erfindung könnten die Justiermittel ein Keilgetriebe umfassen. Bewegliche Teile des Keilgetriebes können am Werkzeugträger geführt sein. Eine Unterbringung von beweglichen Teilen des Keilgetriebes am Werkzeugträger hat den Vorteil, dass eine möglicherweise häufiger zu wechselnde Kassette einfacher im Hinblick auf Justiermittel ausgestaltet werden kann. Außerdem ergibt sich der Vorteil, dass die beweglichen Teile des Keilgetriebes, im einfachsten Fall lediglich eine Schraube mit Kegelfläche, praktisch unverlierbar am Werkzeugträger angeordnet werden können. Auch bei einer mehrteiligen Ausführungsform lassen sich die Teile so im Werkzeugträger unterbringen, dass sie bei ihrer üblichen Positionierung aus dem Werkzeugträger nicht herausfallen können.

Gemäß der Erfindung umfasst ein jeweiliges Keilgetriebe eine Justierschraube, die in einem entsprechenden Gewinde im Werkzeugträger eingeschraubt ist. Die Justierschraube wirkt vorzugsweise auf ein Keilelement, das ebenfalls im Werkzeugträger sitzt, z.B. in einer Ausnehmung im Werkzeugträger geführt ist. Das Keilelement kann im Wesentlich zylindrisch sein, bis auf eine Keil-Verschiebefläche, und in einer Bohrung am Werkzeugträger sitzen.

Über das Verstellen einer jeweiligen Justierschraube lässt sich das jeweilige Keilelement in eine gewünschte Lage bringen. Das Keilelement liegt seinerseits an der Kassette an. Die Justierschraube wirkt in einer vorteilhaften Ausführungsform mit z.B. einer Kerbe bzw. V-förmigen Ausnehmung am Keilelement zusammen. Sofern sich die Justierschraube im Bereich der V-förmigen Ausnehmung befindet, kann das Keilelement sich nur noch beschränkt in seiner Ausnehmung bewegen, jedenfalls nicht herausfallen. In einer bevorzugten Ausführung drückt im montierten Zustand eine Kegelspitze der Justierschraube auf eine Fläche der V-förmigen Ausnehmung. Hierdurch wird das Keilelement in seiner Führung verstellt, um auf die Kassette zu deren Lagepositionierung einzuwirken.

In einer überdies bevorzugten Ausgestaltung der Erfindung stehen die Justierschraube und das Keilelement im Winkel zueinander. Hierdurch kann auf einfache Art durch seitliches Eingreifen der Justierschraube in die Ausnehmung am Keilelement verhindert werden, dass das Keilelement auch im leicht gelösten Zustand der Justierschraube aus dem Werkzeugträger herausfallen kann. Zudem lässt sich dadurch eine einfach zugängliche Betätigungsposition für die Justierschraube realisieren.

Um eine Einstellbarkeit der Kassette in weiteren Koordinatenrichtungen zu ermöglichen, können zusätzliche Justiermittel, insbesondere wenigstens eine weitere Justierschraube an der Kassette vorhanden sein.

Eine radiale Positionierung der Kassette mit einem Keilgetriebe könnte sich nicht gemäß der Erfindung bereits durch ein einziges Keilgetriebe realisieren lassen.

Durch die erfindungsgemäße Ausgestaltung des Werkzeugs mit mehreren Keilgetrieben, insbesondere zwei Keilgetrieben, lässt sich eine radiale Positionierung nicht nur dadurch erzielen, dass die Kassette um einen Drehpunkt radial verstellt wird. Vielmehr kann dadurch die komplette Kassette bei entsprechender Anordnung der Keilgetriebe in einer Art Parallelverschiebung radial versetzt werden.

Hierdurch sind auch unterschiedliche Winkel der Kassette zur Längsachse des Werkzeugträgers realisierbar.

Dies ist dadurch ermöglicht, dass mehrere, z.B. zwei Keilgetriebe axial versetzt im Werkzeugträger angeordnet sind.

Vorzugsweise sind die Keilgetriebe axial fluchtend. Damit lässt sich die Kassette auf einer Auflageebene an zwei axial versetzten Stellen zueinander radial nach außen schieben. Hierdurch kann im Hinblick auf eine gewünschte Einstellung der Schneidplatte ein vielfältiges Einstellspektrum zur Anwendung kommen.

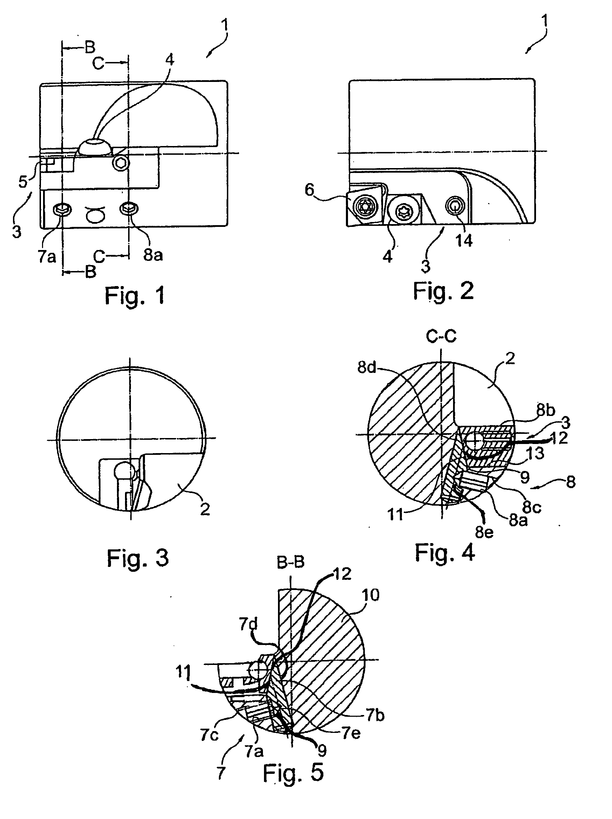

Ein Ausführungsbeispiel der Erfindung ist in den Zeichnungen dargestellt und wird nachstehend unter Angabe weiterer Vorteile und Einzelheiten näher erläutert. Es zeigen
- Figur 1 und 2: Seitenansichten des vorderen Teils eines Werkzeugträgers mit erfindungsgemäßer Kassettenverstellung,
- Figur 3: eine Stirnansicht des Werkzeugs nach Figur 1 und 2,
- Figur 4: eine Schnittansicht bei eine, Schnitt anhand der Schnittlinie C-C in Figur 1 und
- Figur 5: eine Schnittansicht eines Schnitts entlang der Schnittlinie B-B in Figur 1.

### Beschreibung des Ausführungsbeispiels

In den Figuren ist der vordere Teil eines Feinbearbeitungswerkzeugs 1 dargestellt. In einer segmentförmigen Ausnehmung 2 ist eine Kassette 3 über eine Schraube 4 montiert.

Die Kassette 3 ist mit einer Schneidplatte 5, z.B. einer PKD-Schneidplatte bestückt. Die Befestigung der Schneidplatte 5, erfolgt über eine Schraube 6, sie kann jedoch auch z.B. gelötet oder geklemmt sein. Zur Feineinstellung der Position der Kassette 3 und damit der Schneidplatte 5 sind zwei Keilgetriebe 7, 8 vorgesehen. Jedes Keilgetriebe umfasst eine Justierschraube 7a, 8a mit kegelförmigem Kopf 9 sowie ein Keilelement 7b, 8b. Die Justierschrauben 7a, 8a sind in entsprechende Gewindebohrungen 7c, 8c in einem Grundkörper 10 des Feinbearbeitungswerkzeugs 1 eingeschraubt. Die zylindrischen Keilelemente 7b, 8b sitzen in Bohrungen 7d, 8d im Grundkörper 10 des Feinbearbeitungswerkzeugs 1. Die Keilelemente 7b, 8b weisen eine hier beispielhaft V-förmige Einkerbung 7e, 8e auf, in welcher der kegelförmige Kopf 9 der jeweiligen Justierschraube 7a, 8a lagert. Im Justierfall drückt der kegelförmige Kopf 9 der jeweiligen Justierschraube 7a, 8a auf eine Seitenfläche der V-förmigen Einkerbung 7e, 8e. Hierdurch lässt sich das Keilelement 7b, 8b in der Bohrung 7d, 8d verschieben. Am vorderen Bereich der Keilelemente 7b, 8b ist eine Schrägfläche 11 ausgebildet, die jeweils auf eine Fläche 12 an der Kassette 3 einwirkt, insbesondere dort anliegt und eine Anpresskraft auf diese ausüben. Durch Verstellen der Justierschraube 7a, 8a wird das Keilgetriebe 7 bzw. 8 betätigt, in dem das Keilelement 7b, 8b in der jeweiligen Führung 7d, 8d verschoben wird. Dadurch verschiebt sich die Schrägfläche 11 des jeweiligen Keilelements 7b, 8b in Bezug auf die Fläche 12 an der Kassette 3, wodurch die Kassette 3 in ihrer Position radial nach außen verschoben wird, entlang einer Auflagefläche 13 in der Ausnehmung 2 am Grundkörper 10 des Feinbearbeitungswerkzeugs 1.

Durch die Anordnung der Justierschraube 7a, 8a und des Keilelements 7b, 8b im Grundkörper des Feinbearbeitungswerkzeugs 1 kann nicht nur die Kassette 3 einfacher ausgestaltet werden, bei vorhandener Radialverstellung, sondern es lässt sich auch eine unverlierbare Unterbringung der Keilelemente 7b, 8b bzw. Justierschrauben 7a, 8a realisieren. Greift die Justierschraube 7a, 8a in die V-förmige Einkerbung 7e, 8e ein, kann das jeweilige Keilelement 7b, 8b nicht aus der Bohrung 7d, 8d herausfallen.

Über die Keilgetriebe 7, 8 lässt sich eine sehr feinfühlige radiale Einstellung der Kassette 3 vornehmen. An der Kassette 3 können weitere Einstellmöglichkeiten vorgesehen sein, beispielsweise eine Einstellschraube 14.

## Patentansprüche

1. Spanabhebendes Werkzeug (1) mit einem Werkzeugträger, einer an am Werkzeugträger angebrachten Kassette (3), einer Schneidplatte (5), die an der Kassette angeordnet ist, sowie Justiermittel, mit welchen die Position der Kassette (3) am Werkzeugträger einstellbar ist, wobei die Justiermittel mehrere axial versetzt im Werkzeugträger angeordnet Keilgetriebe (7, 8) umfassen, die zwischen Kassette (3) und Werkzeugträger wirken und eine radiale und/oder axiale Justierung bezogen auf eine Längsachse des Werkzeugträgers erlauben, wobei ein jeweiliges Keilgetriebe (7, 8) eine Justierschraube (7a, 8a) und ein Keilelement (7b, 8b) umfasst, wobei ein jeweiliges Keilgetriebe (7, 8) über die Justierschraube (7a, 8a) eingestellt werden kann, die in ein entsprechendes Gewinde (7c, 8c) im Werkzeugträger eingeschraubt ist und auf das Keilelement (7b, 8b) wirkt, **dadurch gekennzeichnet, dass** ein jeweiliges Keilelement (7b, 8b) in einer Ausnehmung (7d, 8d) im Werkzeugträger geführt ist und an der Kassette (3) anliegt.

2. Spanabhebendes Werkzeug nach Anspruch 1, **dadurch gekennzeichnet, dass** die mehreren Keilgetriebe (7, 8) in der Achse fluchtend im Werkzugträger angeordnet sind.

3. Spanabhebendes Werkzeug nach Anspruch 1 oder 2, **dadurch gekennzeichnet, dass** die Justierschraube (7a, 8a) eine Kegelspitze (8) umfasst, die auf eine insbesondere V-förmige Ausnehmung (7a, 8a) des Keilelements (7b, 8b) drückt.

4. Spanabhebendes Werkzeug nach einem der Ansprüche 1 bis 3, **dadurch gekennzeichnet, dass** die Justierschraube (7a, 8a) und das Keilelement (7b, 8b) im rechten Winkel zueinander stehen.

5. Spanabhebendes Werkzeug nach einem der vorhergehenden Ansprüche, **dadurch gekennzeichnet, dass** an der Kassette (3) wenigstens eine weitere Justierschraube (7a, 8a) vorgesehen ist.

## Claims

1. A cutting tool (1) having a tool carrier, a cassette (3) mounted on the tool carrier, a cutting plate (5) arranged on the cassette (3), and adjusting means, with which the position of the cassette (3) on the tool carrier is adjustable, wherein the adjusting means comprise multiple wedge mechanisms (7, 8) which are arranged in an axially offset manner in the tool carrier, and which act between the cassette (3) and the tool carrier and allow for a radial and/or axial adjustment with regard to a longitudinal axis of the tool carrier, wherein a respective wedge mechanism (7, 8) comprises an adjusting screw (7a, 8a) and a wedge member (7b, 8b), wherein a respective wedge mechanism (7, 8) can be adjusted via the adjusting screw (7a, 8a), which is screwed into a corresponding thread (7c, 8c) in the tool carrier and which acts on the wedge member (7b, 8b), **characterized in that** a respective wedge member (7b, 8b) is guided in a recess (7d, 8d) in the tool carrier and is abutting on the cassette (3).

2. The cutting tool according to claim 1, **characterized in that** the multiple wedge mechanisms (7, 8) are arranged in alignment with the axis of the tool carrier.

3. The cutting tool according to claim 1 or 2, **characterized in that** the adjusting screw (7a, 8a) comprises a conical tip (8), which presses down on a particularly V-shaped recess (7a, 8a) of the wedge member (7b, 8b).

4. The cutting tool according to any one of claims 1 to 3, **characterized in that** the adjusting screw (7a, 8a) and the wedge member (7b, 8b) are at a right angle to each other.

5. The cutting tool according to any one of the preceding claims, **characterized in that** on the cassette (3) at least one further adjusting screw (7a, 8a) is provided.

## Revendications

1. Outil d'usinage à enlèvement de copeaux (1) avec un support d'outil, une cassette (3) mise en place sur le support d'outil, une plaquette de coupe (5) disposée contre la cassette (3), ainsi que des moyens de réglage permettant d'ajuster la position de la cassette (3) sur le support d'outil, les moyens de réglage comprenant plusieurs engrenages à coin (7, 8) disposés en décalage axial dans le support d'outil, agissant entre la cassette (3) et le support d'outil et permettant un réglage radial et/ou axial par rapport à un axe longitudinal du support d'outil, chaque engrenage à coin (7, 8) comprenant une vis de réglage (7a, 8a) et un élément de coin (7b, 8b), chaque engrenage à coin (7, 8) pouvant être réglé au moyen de la vis de réglage (7a, 8a) serrée dans un filet (7c, 8c) correspondant du support d'outil et agissant sur l'élément de coin (7b, 8b), **caractérisé en ce que** chaque élément de coin (7b, 8b) est guidé dans un évidement (7d, 8d) du support d'outil et bute contre la cassette (3).

2. Outil d'usinage à enlèvement de copeaux selon la revendication 1, **caractérisé en ce que** les plusieurs engrenages à coin (7, 8) sont disposés en alignement sur l'axe dans le support d'outil.

3. Outil d'usinage à enlèvement de copeaux selon la revendication 1 ou 2, **caractérisé en ce que** la vis de réglage (7a, 8a) comporte une pointe conique (8) qui appuie sur un évidement (7a, 8a) spécifiquement en forme de V de l'élément de coin (7b, 8b).

4. Outil d'usinage à enlèvement de copeaux selon l'une des revendications 1 à 3, **caractérisé en ce que** la vis de réglage (7a, 8a) et l'élément de coin (7b, 8b) sont disposés à angle droit l'une par rapport à l'autre.

5. Outil d'usinage à enlèvement de copeaux selon l'une des revendications précédentes, **caractérisé en ce qu'**au moins une autre vis de réglage (7a, 8a) est prévue sur la cassette (3).
